# EUROPEAN PATENT SPECIFICATION

(11) **EP 3 257 327 B1**
(45) Date of publication and mention of the grant of the patent: **26.08.2020**
(21) Application number: 16702269.8
(22) Date of filing: 13.01.2016
(51) Int. Cl.: H05B 3/84, B60S 1/04

(54) **HEATER FOR WINDSHIELD WIPER PARK POSITION**
HEIZELEMENT FÜR SCHEIBENWISCHERPARKSTELLUNG
DISPOSITIF DE CHAUFFAGE POUR POSITION DE REPOS D'ESSUIE-GLACE DE PARE-BRISE

(30) Priority: 13.02.2015 US 201562116036 P
(43) Date of publication of application: 20.12.2017
(73) Proprietor: Illinois Tool Works Inc., Glenview, IL 60025 (US)
(72) Inventor: BULGAJEWSKI, Edward F., Glenview, IL 60025 (US); SLIWA, Piotr, Glenview, IL 60025 (US)
(74) Representative: HGF
(86) International application number: PCT/US2016/013179
(87) International publication number: WO 2016/130263

(56) References cited:
- EP-A2- 0 788 295
- DE-C1- 3 410 117
- US-A- 5 877 473
- US-A1- 2005 045 613
- US-A1- 2010 213 189

## Description

### CROSS-REFERENCE TO RELATED APPLICATIONS

This application claims the benefit of US provisional application 62/116,036 filed February 13, 2015.

### FIELD OF THE INVENTION

The present invention relates to heaters positionable on automotive windshields to heat the area of the windshield where the windshield wipers park when not used and in particular to a narrow form factor heater providing more uniform heat output.

### BACKGROUND OF THE INVENTION

During periods when windshield wipers are not in motion, for example, on a parked car, the wiper blades may freeze to the windshield. This freezing can later damage the windshield wiper blades when the windshield wipers are activated or, by placing excess strain on the wiper motor, can blow electrical fuses rendering the windshield wipers inoperative at a time when they are most needed.

For this reason, it is known to place electric heaters in the "park position" of the windshield wipers to heat the windshield sufficiently that the motionless wiper blades do not freeze to its surface. Such electrical heaters may be provided by printing a series of thin high resistance conductors directly on the windshield glass surface. Ohmic heating of this conductor, when current passes through it, can warm the adjacent glass sufficiently to prevent freezing of the wiper blades.

The application of the printed conductor to the windshield is difficult and costly and, if made incorrectly or damaged, can require costly rework or scrapping of the windshield. The conductor must be placed away from the edge of the windshield where mastic is used to adhere the windshield to the vehicle and is normally covered by a black painted border around the windshield. Current designs can require blocking substantial width of usable windshield area. The thin conductors are susceptible to small nicks and breaks which can disable an entire portion of the heater.

Document DE3410117 discloses a device according to the preamble of claim 1.

### SUMMARY OF THE INVENTION

The present invention provides a narrow, form factor "area" heater for the windshield wiper park position in the form of a "peel and stick" film that can be applied to the windshield at various stages during manufacture and which is more readily repaired or reworked in the event of failure. A narrow form factor is achieved in an area-type heater without loss of heating uniformity by a conductor bus configuration which promotes current flow first along the length of the heater through low resistance material and then across the width of the heater through the high resistance material. Improved manufacturability of the heater is made possible by a clip system that allows the electrical assembly of multiple film components together into a continuous heater element.

Specifically, in one embodiment, the invention provides a windshield wiper park position heater having a flexible polymeric insulator sheet adapted to conform to a lower surface of a curved automotive windshield, with a length aligned with a length of a windshield wiper in park position. A conductive heater material is coated on the insulator sheet and a relatively low resistance electrode material is applied to the heater material on opposite sides of gap regions to establish a current flow through the heater material of the gap regions. The gap regions are sized to be distributed along substantially the entire length of the insulator sheet proximate to a contact area of the windshield wiper blade against the windshield in park position when the insulator sheet is applied to the automotive windshield.

It is thus a feature of at least one embodiment of the invention to provide an area-type heater that is both resistant to damage and that can be constructed before attachment to the windshield to permit the heater to be attached flexibly at different stages in the windshield manufacturing process. It is another feature of at least one embodiment of the invention to provide a more space efficient heating system than can be obtained by single resistance conductors. It is another feature of at least one embodiment of the invention to provide a more robust heater that can be more easily repaired or replaced.

The length of the insulator sheet may be at least six times longer than a height of the insulator sheet measured along a plane of attachment of the windshield wiper park position heater to a windshield and the electrode material may extend in unbroken bus structures along the length of the windshield wiper park position heater to promote average current flow along the width of the heater.

It is thus a feature of at least one embodiment of the invention to provide improved heat uniformity in an extremely long aspect ratio needed for heaters of this type by promoting width-wise current flow.

The flexible polymeric sheet may have a length greater than 40 inches.

It is thus a feature of at least one embodiment of the invention to provide a single heating unit that can provide defrosting for two windshield wipers on a standard vehicle.

The windshield wiper park position heater may include an adhesive applied in contact with the high resistance heater material in the gap regions.

It is thus a feature of at least one embodiment of the invention to permit close thermal proximity between the heater and the windshield and to allow the supporting substrate to trap generated heat against the windshield.

The heater may be black when viewed from a side opposite a side attached to a windshield.

It is thus a feature of at least one embodiment of the invention to provide a heater system that blends with the black masking material normally applied around the vehicle windshields.

The insulator sheet maybe transparent and the heater material may be black.

It is thus a feature of at least one embodiment of the invention to make dual use of the high carbon content of the high resistance material to also provide for a black pigment effect.

The electrode material includes upper and lower electrodes extending along a length of the insulator sheet at of opposite edges of the insulator sheet across its width, and the windshield wiper park position heater further includes a feeder electrode extending from one end of the insulator sheet to a connection point with one of the upper and lower electrodes substantially at a midpoint along a length of the flexible polymeric insulator sheet.

It is thus a feature of at least one embodiment of the invention to reduce the effect of voltage drop along an extended length of upper and lower bus electrodes such as may affect uniformity of heat in a long aspect ratio heater by providing a means for introducing current at a midpoint of the heater assembly.

The electrode material may include an outer and inner electrode extending along the length of the polymeric insulator sheet, with the outer electrode surrounding the inner electrode wherein the outer electrode has a width less than the inner electrode.

It is thus a feature of at least one embodiment of the invention to provide a heating zone that encircles the area of the wiper blade for reduced ice adhesion of the wiper blade to the windshield.

The electrodes of the windshield wiper park position heater include finger elements extending outwardly into interdigitated arrangement with finger electrodes of another electrode.

It is thus a feature of at least one embodiment of the invention to provide a large heating area while preventing hot spots in the high resistance material.

The flexible polymeric insulator sheet, heater material, and electrode material maybe divided into first and second portions joined by ductile metal crimp connectors.

It is thus a feature of at least one embodiment of the invention to provide a method of fabricating extremely long and thin area-type resistances by allowing piecewise construction that can then be spliced together.

The ductile metal crimp connectors may include conductive elements piercing the overlapping first and second portions to electrically join the conductive electrode materials on the first and second portions.

It is thus a feature of at least one embodiment of the invention to provide a method of joining laminated structures having electrodes separated by insulating materials when they are assembled.

The ductile metal crimp connector may further include a connector for receiving an electrical cable for electrical communication with the inwardly extending teeth.

It is thus a feature of at least one embodiment of the invention to provide a method of introducing power from the vehicle into the windshield wiper park position heater using conventional cabling.

The connector may be a crimp sleeve for receiving an electrical cable conductor to be crimped thereabout for electrical connection between the electrical cable conductor and the ductile metal crimp connector.

It is thus a feature of at least one embodiment of the invention to provide a method of introducing electricity from a cable at a midpoint of the assembly at the same time as connecting the assembly at the midpoint seam.

The high resistance conductive heater material may be a positive temperature coefficient material.

It is thus a feature of at least one embodiment of the invention to provide a self-regulating heater surface to provide more uniform heating when parallel current flows are allowed through a resistive material as in an area-type heater.

Other features and advantages of the invention will become apparent to those skilled in the art upon review of the following detailed description, claims and drawings in which like numerals are used to designate like features.

### BRIEF DESCRIPTION OF THE DRAWINGS

Fig. 1 is a fragmentary view of an automotive windshield showing the location of a windshield wiper park position heater and showing an expanded fragmentary view of a rear side of a heater constructed according to a first embodiment of the invention providing a split return bus;
Fig. 2 is an expanded fragmentary view similar to that of Fig. 1 showing a second embodiment using a looping return bus;
Fig. 3 is an expanded fragmentary perspective view of the assembly of two strip elements to produce the embodiments of Figs. 1 or 2 using deformable metallic clips;
Fig. 4 is a cross-sectional view through the assembled strips of Fig. 3 taken along line 4 - 4 showing an electrical interconnection provided by teeth extending inward from the clips of Fig. 3;
Fig. 5 is a side view of the deformable metal clips of Fig. 3 showing a crimped attachment to a power supply cable;
Fig. 6 is a diagram of a heating area provided by the present invention and a windshield wiper contact area on a windshield showing alternative strategies of heating centered on the contact area and heating concentrated in a periphery around the contact area;
Fig. 7 is a cross-section along line 7-7 of Fig. 1 through the windshield of a vehicle having an attached windshield wiper park position heater showing the application of the heater to the windshield and connection to the automotive electrical systems; and
Fig. 8 is a detailed fragmentary view of a portion of the heater of the present invention showing an average current flow across the width of the heater as opposed to along its length for improved heat uniformity in a narrow form factor area-heater.

Before the embodiments of the invention are explained in detail, it is to be understood that the invention is not limited in its application to the details of construction and the arrangement of the components set forth in the following description or illustrated in the drawings. The invention is capable of other embodiments and of being practiced or being carried out in various ways. Also, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof.

### DETAILED DESCRIPTION OF THE PREFERRED EMBODIMENTS

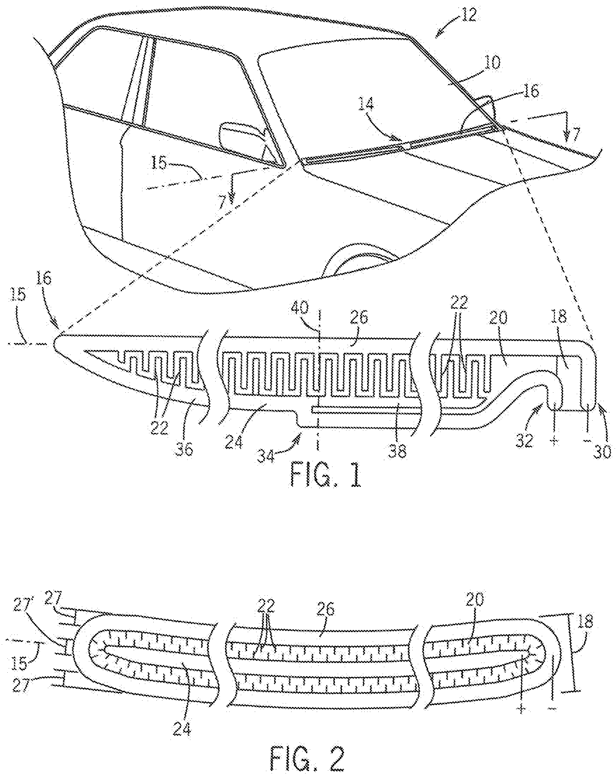

Referring now to Fig. 1, a windshield 10 of an automobile 12 or other vehicle may have a lower front portion defining a windshield wiper park position 14 being a position on the outside of windshield 10 at which windshield wiper blades (not shown for clarity) will rest when the windshield wipers are inactive. The windshield wiper park position 14 will generally extend along a horizontal axis 15 defined by a line of contact between the windshield wiper blade and the windshield 10 in the park position.

The present invention provides a heater strip 16 that, in one embodiment, extends along the full length of the windshield wiper park position 14 and that is attached at a lower edge of the glass of the windshield 10 inside the vehicle. The heater strip 16 receives a source of electrical current from the automobile power system (e.g., 12 volts) to heat to the windshield wiper park position 14 preventing ice from adhering the windshield wipers to the windshield 10.

In one embodiment, as shown, the heater strip 16 generally includes an electrically insulating, flexible polymer support film 18 holding on its top surface (positioned toward the glass of the windshield 10) a resistive layer 20 generating heat with the passage of electricity therethrough. Positioned on top of the resistive layer 20 is a set of conductive interdigitated electrodes 22 communicating with the resistive layer 20 to pass current therethrough. The interdigitated electrodes 22 extend alternately from an electrode bus 24 and a return bus 26 while the electrode bus 24 and return bus 26 run horizontally along the length of the windshield wiper park position 14.

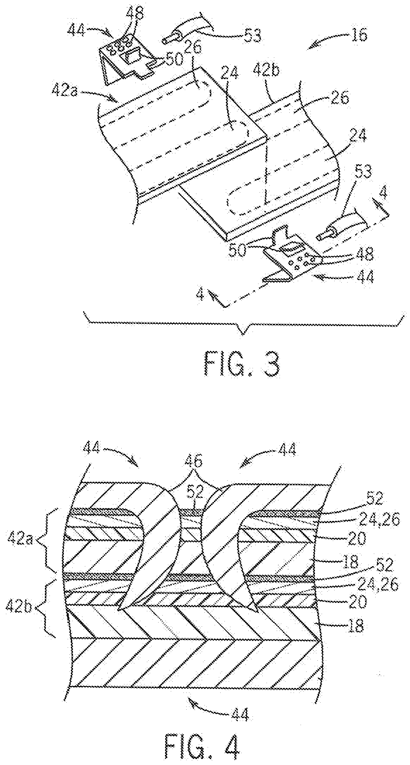

Alternatively, for any of the embodiments described herein and represented, for example, in Fig. 3, the interdigitated electrodes 22, the electrode bus, and the return bus 26 may be applied directly to the flexible polymer support film 18 and then covered with the resistive layer 20. In either case, there is a direct connection between the interdigitated electrodes 22 and the resistive layer 20 allowing current flow through the latter from the former.

The resistive layer 20 may be constructed of an electrically conductive material having a high resistance to provide low current draw and to generate heat over its surface. Preferably, the resistive layer 20 is a conductive polymer, for example, having a fine particulate filler and may be a conductive polyester material exhibiting a positive temperature coefficient (PTC). Positive temperature coefficient materials have rising resistance with increased temperature and thus provide a form of temperature feedback preventing hotspots. Positive temperature coefficient (PTC) heaters, suitable for the present invention, are also disclosed in U.S. Pat. Nos. 4,857,711 and 4,931,627 to Leslie M. Watts hereby incorporated in their entireties by reference. Resistive layer 20 may, for example, be screen printed on the flexible polymer support film 18.

The interdigitated electrodes 22, the electrode bus 24, and the return bus 26 may, for example, be a low resistance printed material, for example, a silver ink comprising metallic silver particles in a binder or a metal foil or the like. Generally, the interdigitated electrodes 22, electrode bus 24, and return bus 26 will have much lower resistance than the resistive layer 20 and ideally as low as practical. The interdigitated electrodes 22 and the electrode bus 24 and the return bus 26 may likewise be screenprinted onto the other components. For example, the resistive layer 20 may be printed or otherwise applied to the flexible polymer support film 18 and then the interdigitated electrodes 22, electrode bus 24, and return bus 26 printed on top of that or the interdigitated electrodes 22, electrode bus 24, and return bus 26 may be printed or otherwise applied to the flexible polymer support film 18 and then the resistive layer 20, printed on top of that. This latter configuration may help retain and protect the conductive layer...

Referring still to Fig. 1, in a first embodiment, the return bus 26 may extend generally horizontally by a full width of the windshield 10 leading from a first terminal 30 attached to a negative polarity of the automotive electrical system (typically 12 volts), and the interdigitated electrodes 22 may extend downward therefrom. The electrode bus 24 may connect to a second terminal 32 attach to the positive polarity of the automotive electrical system and may extend horizontally spaced below the return bus 26 to a midpoint 34 approximately halfway along the width of the windshield 10 providing a feeder electrode. At this midpoint 34, the electrode bus 24 splits to provide a first horizontally extending power supply bus arm 36 continuing across the windshield 10 away from the second terminal 32 and a second power supply bus arm 38 turning and proceeding backward toward the second terminal 32. Interdigitated electrodes 22 extend upward from both power supply bus arm 36 and power supply bus arm 38 to fit between the downwardly extending interdigitated electrodes 22 attached to the return bus 26.

The result of this bifurcation in the power bus is to reduce the difference in path length of electrical current between terminals 30 and 32 for paths through interdigitated electrodes 22 at the far right end of the heater strip 16 as opposed to at the far left end of the heater strip 16 thereby providing more uniform heating.

Referring now to Fig. 2 in an alternative embodiment, the return bus 26 may completely encircle the electrode bus 24 with the upper and lower horizontal runs of the return bus 26 having a width 27 approximately one-half the width 27 'of the electrode bus 24. The interdigitated electrodes 22 may extend outward from the electrode bus 24 on its upper and lower sides and end surfaces while the interdigitated electrodes 22 from the return bus 26 may extend inwardly in between those interdigitated electrodes 22 of the electrode bus 24. Otherwise the construction may be similar to that described with respect to Fig. 1 providing, for example, a polymer support film 18 over-printed with either the resistive layer 20 on which conductive interdigitated electrodes 22, electrode bus 24, and return bus 26 are placed or over-printed with the conductive interdigitated electrodes 22, electrode bus 24, and return bus 26 on which the resistive layer 20 is printed.

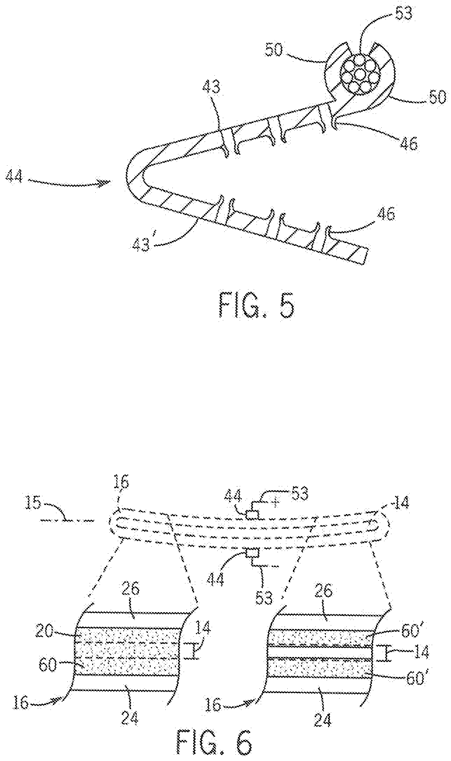

Referring now to Figs. 3 and 5, for reasons of manufacturing convenience, the heater strip 16 may be constructed in two separate components 42a and 42b, for example, separated along line 40 of Fig. 1. The electrode bus 24 of each of the separate components 42a and 42b and the return bus 26 of each of the separate components 42a and 42b may be each joined together, respectively, by overlapping the adjacent ends of the separate components 42a and 42b and connecting the overlapped portions with clips 44. The clips 44 may be ductile metal strips folded in a U-shape to provide opposed arms 43a and 43b that fit positioned in opposition on the overlapping edges of the separate components 42a and 42b to have the arms 43 of the U compressed inwardly until the they fold together sandwiching the edges of the separate components 42a and 42b to hold them together.

Referring also to Fig. 4, the inner surfaces of the arms 43 of the clips 44 may have inwardly extending prongs 46, for example, formed by rough punching of holes 48 in those arms or by cutting and forming tab-form teeth. The prongs 46 puncture the material of the components 42 to pass through the metal conductive layer of either the electrode bus 24 or return bus 26, the resistive layer 20, the polymer support film 18, and an adhesive layer 52 of the first component 42a and then through at least the corresponding metal layer of the electrode bus 24 or return bus 26, resistive layer 20, and the second component 42b to join all of these layers together electrically. The prongs 46 are held firmly in place by an opposed compressive force applied by the bottom arm of the clip 44 which may also have upwardly facing prongs (not shown).

In this example, the adhesive layer 52 is shown on top of the electrode bus 24 and return bus 26 with respect to the polymer support film 18, but in an alternative configuration the adhesive layer 52 can be placed directly on the polymer support film 18 on a side opposite the electrode bus 24 and return bus 26. In either case the adhesive layer 52 helps stabilize the connection of the first and second components 42a and 42b.

Referring again to Fig. 3 and 5, the clips 44 may include upwardly extending deformable crimp elements 50 which may be crimped about a conductor 54 of a power lead or the like and connected to the automotive electrical system to provide a convenient method of attaching power to the heater strip 16. When the clips 44 are centered approximately on the heater strip 16, this attachment method introduces power in a manner that provides improved power distribution by reducing the total run length differences of the power as distributed to the various interdigitated electrodes 22.

Clearly this technique may be used to assemble more than two components 42 together for the construction of the heater strip 16.

Referring now to Fig. 6, the heater strip 16 may be aligned with and circumscribe a contact area between the windshield wiper blade and the windshield defining a windshield wiper park position 14. In the embodiment shown in Fig. 1, a directly heated area 60 provided by the heater strip 16, corresponding generally to the gaps between the electrodes 24, 26, and 22 over the resistive layer 20, may underlie and closely surround the windshield wiper park position 14. Alternatively the directly heated area may be separated into upper and lower heated areas 60'and 60" that flank the upper and lower sides of the windshield wiper park position 14 without underlying the windshield wiper park position 14. This configuration moves the heated areas 60 slightly outward to de-ice a broader area of the windshield (for the same heated area) relying on conduction between the heated areas 60' and 60" to indirectly heat the area under the wiper park position 14. Generally, the area of the electrodes 22, 26 and 24 will not generate heat because the electrode materials effectively short out the resistive layer 20 preventing heating current therethrough. These two approaches therefore also allow positioning of the cold spots as may be desired for best performance.

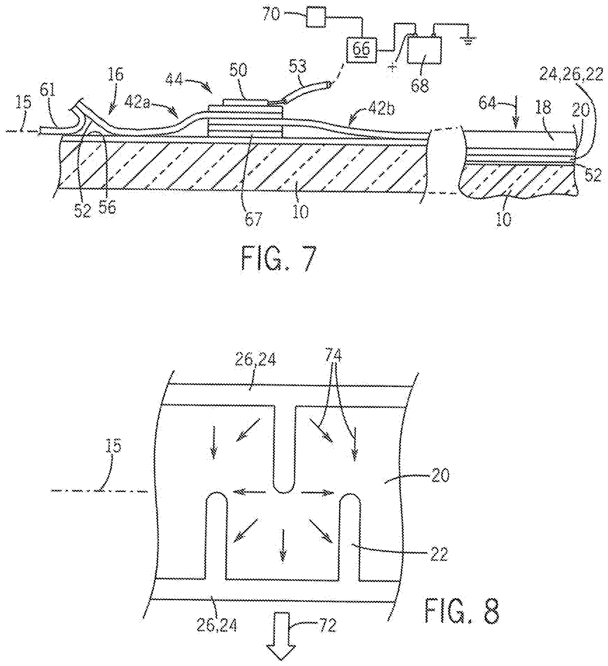

Referring now to Figs. 4 and 7, the adhesive layer 52 of the heater strip 16 may be pressed against the inner surface of the windshield 10 to attach the heater strip 16 to the windshield along the length of the windshield wiper park position 14. The adhesive layer 52 may be a pressure sensitive adhesive exposed by removal of a release liner 61 therefrom before application to the windshield 10. As depicted, the resistive layer 20 is sandwiched between the polymer support film 18 and the glass of the windshield 10 providing greatest thermal communication between the resistive layer 20 and the glass of the windshield 10 and allowing the polymer support film 18 to provide both a protective layer against abrasion or damage to the resistive layer 20 and the electrodes 24, 26 and 22 and also to trap heat from the resistive layer 20 against dispersion within the automobile interior.

The polymer support film 18 may be a black material or may be transparent to allow the black of the resistive layer 20 to be visible therethrough to present a black appearance when the heater strip 16 is viewed along a viewing direction 64 from the interior of the automobile. This black appearance matches the black masking 56 found at the interior edges of the windshield in the region of the windshield wiper park position 14 to which the heater strip 16 is attached.

The clip 44 may be held against the windshield 10 by an additional adhesive layer or material such as double stick tape 67 and may communicate through cable 53 with control electronics 66, for example, a timer, limiting the amount of time of operation of the heater strip 16 to an amount of time necessary to melt typical ice accumulation. In this regard, the timer of the control electronics 66 may pass or block power from an automotive battery 68 and allows the heater strip 16 to be used in a maximum heat output mode for rapid defrosting of the windshield wipers without concern that this high heat mode could unduly waste power or damage the components of the heater strip 16 after cooling ice has dissipated and the interior cabin temperature of vehicle increases, for example, through the use of conventional windshield defrosters and the like. The timer 66 may communicate with an activation switch 70 to automatically activate when the switch is pressed by the driver.

Referring now to Fig. 8, the arrangement of the electrodes 26, 24, and 22 is such as to promote a net current flow 72 along a generally vertical or width-oriented direction perpendicular to the horizontal axis 15 defining the length. This net current flow 72 is generally the vector sum of individual current flow 74, the latter along paths of shortest resistance between the electrodes 26, 24, and 22. By orienting the net current flow 72 along the width direction, only after distribution of electrical current along the lower resistance bus structure of electrodes 26 and 24, improved uniformity of temperature can be attained along the horizontal axis 15 in extremely high aspect ratio designs of this kind. In this regard, the length of the heater strip 16 measured along the horizontal axis 15 may be eight or more times the width of the heater strip 16 measured perpendicularly to horizontal axis 15. In one embodiment, the length of the heater strip 16 measured along horizontal axis 15 may be greater than 20 inches, for example, when an individual heater strip 16 is used for each windshield wiper blade or greater than 40 inches when a single heater strip 16 is used for both windshield wipers. The width of the heater strip 16 is measured generally perpendicularly to horizontal axis 15 in the plane of the windshield and will normally be less than three inches to fit unobtrusively at the lower edge of the windshield.

Certain terminology is used herein for purposes of reference only, and thus is not intended to be limiting. For example, terms such as "upper", "lower", "above", and "below" refer to directions in the drawings to which reference is made. Terms such as "front", "back", "rear", "bottom" and "side", describe the orientation of portions of the component within a consistent but arbitrary frame of reference which is made clear by reference to the text and the associated drawings describing the component under discussion. Such terminology may include the words specifically mentioned above, derivatives thereof, and words of similar import. Similarly, the terms "first", "second" and other such numerical terms referring to structures do not imply a sequence or order unless clearly indicated by the context.

When introducing elements or features of the present disclosure and the exemplary embodiments, the articles "a", "an", "the" and "said" are intended to mean that there are one or more of such elements or features. The terms "comprising", "including" and "having" are intended to be inclusive and mean that there may be additional elements or features other than those specifically noted.

## Claims

1. An automotive windshield assembly comprising:
- a curved windshield (10);
- windshield wipers for wiping the windshield (10) and being positioned in a park position (14) when not activated; and
- a windshield wiper park position heater (16), comprising:
a flexible polymeric insulator sheet (18) conforming to a lower surface of the curved automotive windshield (10), having a length aligned with a length of the windshield wiper in park position (14) and sized so that a periphery of the insulator sheet (18) proximately circumscribes a contact area of a windshield wiper blade against a windshield (10) in the park position (14), the insulator sheet (18) supporting:
(a) a resistive layer (20) generating heat with the passage of electricity therethrough; and
(b) a conductive electrode (22) communicating with the resistive layer (20) to pass current therethrough; said resistive layer (20) and electrode (22) extending along an entire length of the insulator sheet (18) proximate to a contact area of the windshield wiper blade against the windshield (10) in park position (14) when the insulator sheet (18) is applied to the automotive windshield (10),
**characterized in that**
the electrode (22) includes upper and lower electrodes (22) extending along a length of the insulator sheet (18) at opposite edges of the insulator sheet (18) across its width and including a feeder electrode extending from one end of the insulator sheet (18) to a connection point with one of the upper and lower electrodes (22) at a midpoint along a length of the flexible polymeric insulator sheet; and
wherein the upper and lower electrodes (22) each include finger elements extending outwardly in interdigitated arrangement with finger electrodes of another of the upper and lower electrodes (22).

2. The automotive windshield assembly of claim 1 wherein the length of the insulator sheet (18) is at least six times longer than a height of the insulator sheet (18) measured along a plane of attachment of the windshield wiper park position heater (16) to a windshield (10) and wherein the electrodes (22) extend in continuous bus structures (24, 26) along the length of the windshield wiper park position heater (16) to promote average current flow along a width of the heater (16).

3. The automotive windshield assembly of claim 1 or 2 wherein the insulator sheet (18) has a length greater than 46,8 cm (20 inches) and a height less than 7,6 cm (three inches).

4. The automotive windshield assembly of claim 1 or 2 wherein the insulator sheet (18) has a length greater than 101,6 cm (40 inches).

5. The automotive windshield assembly of claim 2 further including an adhesive (52) applied in contact with the resistive layer (20).

6. The automotive windshield assembly of one of the preceding claims wherein the windshield wiper park position heater (16) is black when viewed from the side of the insulator sheet (18).

7. The automotive windshield assembly of claim 6 wherein the insulator sheet (18) is transparent and the heater material is black.

8. The automotive windshield assembly of claim 1 wherein the electrode (22) includes an outer and inner electrode extending along the length of the insulator sheet (18), with the outer electrode surrounding the inner electrode wherein the outer electrode has a width less than the inner electrode,
wherein the inner and outer electrode (22) each include finger elements extending outwardly into interdigitated arrangement with finger electrodes of another of the inner and outer electrodes.

9. The automotive windshield assembly of claim 1 wherein the insulator sheet (18), resistive layer (20) and electrode (22) are divided into first and second portions (42a, 42b) joined by ductile metal crimp connectors (40), wherein the ductile metal crimp connectors (40) include conductive elements (46) piercing the first and second portions when they are overlapped to electrically join the electrode (22) on the first and second portions (42a, 42b), and
wherein ductile metal crimp connectors (44) include opposed portions (43a, 43b) sized to receive therebetween the first and second portions (42a, 42b) in overlapping configuration and to be inelastically crimped together about the first and second portions and wherein the opposed portions (43a, 43b) include inwardly extending teeth (46) adapted to pierce through the overlapping first and second portions (42a, 42b) to electrically join the electrode (22) on the first and second portions.

10. The automotive windshield assembly of claim 9 wherein each ductile metal crimp connector (44) further includes a connector (50) for receiving an electrical cable (54) for electrical communication with the inwardly extending teeth (46),
wherein the connector (44) is a crimp sleeve for receiving an electrical cable conductor to be crimped thereabout for electrical connection between the electrical cable conductor and the ductile metal crimp connector.

11. The automotive windshield assembly of claim 1 wherein the resistive layer (20) is a positive temperature coefficient material.

12. The automotive windshield assembly of claim 1 wherein the electrode material is conductive metal particles in a binder applied directly to the insulator sheet (18).

13. A method of fabricating an automotive windshield assembly as defined in claim 1, using a windshield wiper park position heater (16) having:
a flexible polymeric insulator sheet (18) adapted to conform to a lower surface of a curved automotive windshield (10), having a length aligned with a length of a windshield wiper in park position (14) and sized so that a periphery of the sheet proximately circumscribes a contact area of a windshield wiper blade against a windshield (10) in the park position (14); a resistive layer (20) coated on the flexible polymeric insulator sheet (18); a conductive electrode (22) applied to the resistive layer (20) and communicating with it to pass current therethrough; said resistive layer (20) and electrode (22) extending along substantially an entire length of the insulator sheet (18) proximate to a contact area of the windshield wiper blade against the windshield (10) in park position (14) when the insulator sheet (18) is applied to the automotive windshield (10), the method comprising the steps of:
(a) applying the resistive layer (20) and the electrode (22) to the insulator sheet (18) to create a heater (16); and
(b) after step (a), applying the heater (16) to an inner surface of a vehicle windshield (10) in a park position (14) of windshield wipers on the windshield.

## Patentansprüche

1. Kraftfahrzeugwindschutzscheibenanordnung, umfassend:
- eine gekrümmte Windschutzscheibe (10);
- Scheibenwischer zum Wischen der Windschutzscheibe (10), wobei dieser, wenn nicht aktiviert, in einer Parkstellung (14) angeordnet ist; und
- ein Scheibenwischerparkstellungsheizelement (16), umfassend:
eine flexible Polymerisolatorfolie (18), die sich an eine Unterseite der gekrümmten Kraftfahrzeugwindschutzscheibe (10) anpasst, die eine Länge aufweist, die an einer Länge des Scheibenwischers in Parkstellung (14) ausgerichtet und derart dimensioniert ist, dass ein Umfang der Isolatorfolie (18) eine Kontaktfläche eines Scheibenwischerblatts unmittelbar gegen eine Windschutzscheibe (10) in der Parkstellung (14) abgrenzt,
wobei die Isolatorfolie (18) unterstützt:
(a) eine Widerstandsschicht (20), die Wärme mit dem Durchgang von Elektrizität dahindurch erzeugt; und
(b) eine leitfähige Elektrode (22), die mit der Widerstandsschicht (20) verbunden ist, um Strom dahindurch zu führen; wobei sich die Widerstandsschicht (20) und die Elektrode (22) entlang einer gesamten Länge der Isolatorfolie (18) in der Nähe einer Kontaktfläche des Scheibenwischerblatts gegen die Windschutzscheibe (10) in Parkstellung (14) erstrecken, wenn die Isolatorfolie (18) an der Kraftfahrzeugwindschutzscheibe (10) angebracht ist,
**dadurch gekennzeichnet, dass**
die Elektrode (22) obere und untere Elektroden (22) einschließt, die sich entlang einer Länge der Isolatorfolie (18) an gegenüberliegenden Rändern der Isolatorfolie (18) über ihre Breite erstrecken, und einschließlich einer Speiseelektrode, die sich von einem Ende der Isolatorfolie (18) zu einem Verbindungspunkt mit einem von den oberen und den unteren Elektroden (22) an einem Mittelpunkt entlang einer Länge der flexiblen Polymerisolatorfolie erstreckt; und
wobei die oberen und unteren Elektroden (22) jeweils Fingerelemente einschließen, die sich nach außen in einer ineinandergreifenden Anordnung mit Fingerelektroden einer anderen der oberen und unteren Elektroden (22) erstrecken.

2. Kraftfahrzeugwindschutzscheibenanordnung nach Anspruch 1, wobei die Länge der Isolatorfolie (18) zumindest sechsmal länger als eine Höhe der Isolatorfolie (18), gemessen entlang einer Befestigungsebene des Scheibenwischerparkstellungsheizelements (16) zu einer Windschutzscheibe (10), ist und wobei sich die Elektroden (22) in fortlaufenden Busstrukturen (24, 26) entlang der Länge des Scheibenwischerparkstellungsheizelements (16) erstrecken, um einen durchschnittlichen Stromfluss entlang einer Breite des Heizelements (16) zu fördern.

3. Kraftfahrzeugwindschutzscheibenanordnung nach Anspruch 1 oder 2, wobei die Isolatorfolie (18) eine Länge größer als 46,8 cm (20 Zoll) und eine Höhe kleiner als 7,6 cm (drei Zoll) aufweist.

4. Kraftfahrzeugwindschutzscheibenanordnung nach Anspruch 1 oder 2, wobei die Isolatorfolie (18) eine Länge größer als 101,6 cm (40 Zoll) aufweist.

5. Kraftfahrzeugwindschutzscheibenanordnung nach Anspruch 2, ferner umfassend ein Haftmittel (52), das in Kontakt mit der Widerstandsschicht (20) aufgebracht wird.

6. Kraftfahrzeugwindschutzscheibenanordnung nach einem der vorhergehenden Ansprüche, wobei das Scheibenwischerparkstellungsheizelement (16) bei Betrachtung von der Seite der Isolatorfolie (18) schwarz ist.

7. Kraftfahrzeugwindschutzscheibenanordnung nach Anspruch 6, wobei die Isolatorfolie (18) durchsichtig ist und das Heizelementmaterial schwarz ist.

8. Kraftfahrzeugwindschutzscheibenanordnung nach Anspruch 1, wobei die Elektrode (22) eine äußere und eine innere Elektrode einschließt, die sich entlang der Länge der Isolatorfolie (18) erstrecken, wobei die äußere Elektrode die innere Elektrode umgibt, wobei die äußere Elektrode eine Breite kleiner als die innere Elektrode aufweist,
wobei die innere und die äußere Elektrode (22) jeweils Fingerelemente einschließen, die sich nach außen in einer ineinandergreifenden Anordnung mit Fingerelektroden einer anderen der inneren und der äußeren Elektrode erstrecken.

9. Kraftfahrzeugwindschutzscheibenanordnung nach Anspruch 1, wobei die Isolatorfolie (18), die Widerstandsschicht (20) und die Elektrode (22) in einen ersten und einen zweiten Abschnitt (42a, 42b) geteilt sind, die durch verformbare Metallcrimpverbinder (40) verbunden sind, wobei die verformbaren Metallcrimpverbinder (40) leitfähige Elemente (46) einschließen, die den ersten und den zweiten Abschnitt durchstechen, wenn sie überlappt werden, um die Elektrode (22) an dem ersten und dem zweiten Abschnitt (42a, 42b) elektrisch zu verbinden, und
wobei verformbare Metallcrimpverbinder (44) gegenüberliegende Abschnitte (43a, 43b) einschließen, die dimensioniert sind, um dazwischen den ersten und den zweiten Abschnitt (42a, 42b) in einer überlappenden Konfiguration aufzunehmen und um unelastisch um den ersten und den zweiten Abschnitt zusammengecrimpt zu werden, und wobei die gegenüberliegenden Abschnitte (43a, 43b) sich nach innen erstreckende Zähne (46) einschließen, die angepasst sind, um durch den überlappenden ersten und zweiten Abschnitt (42a, 42b) zu stechen, um die Elektrode (22) an dem ersten und dem zweiten Abschnitt elektrisch zu verbinden.

10. Kraftfahrzeugwindschutzscheibenanordnung nach Anspruch 9, wobei jeder verformbare Metallcrimpverbinder (44) ferner einen Verbinder (50) zum Aufnehmen eines Elektrokabels (54) zur elektrischen Verbindung mit den sich nach innen erstreckenden Zähnen (46) einschließt, wobei der Verbinder (44) eine Crimphülse zum Aufnehmen eines Elektrokabelleiters ist, die darum zur elektrischen Verbindung zwischen dem Elektrokabelleiter und dem verformbaren Metallcrimpverbinder gecrimpt werden soll.

11. Kraftfahrzeugwindschutzscheibenanordnung nach Anspruch 1, wobei die Widerstandsschicht (20) ein Material mit positivem Temperaturkoeffizienten ist.

12. Kraftfahrzeugwindschutzscheibenanordnung nach Anspruch 1, wobei das Elektrodenmaterial in leitfähigen Metallpartikeln in einem Bindemittel besteht, das direkt auf die Isolatorfolie (18) aufgebracht wird.

13. Verfahren zum Herstellen einer Kraftfahrzeugwindschutzscheibenanordnung nach Anspruch 1 unter Verwendung eines Scheibenwischerparkstellungsheizelements (16), das aufweist:
eine flexible Polymerisolatorfolie (18), die angepasst ist, um sich an eine Unterseite einer gekrümmten Kraftfahrzeugwindschutzscheibe (10) anzupassen, die eine Länge aufweist, die an einer Länge eines Scheibenwischers in Parkstellung (14) ausgerichtet und derart dimensioniert ist, dass ein Umfang der Folie eine Kontaktfläche eines Scheibenwischerblatts unmittelbar gegen eine Windschutzscheibe (10) in der Parkstellung (14) abgrenzt; eine Widerstandsschicht (20), die auf der flexiblen Polymerisolatorfolie (18) beschichtet ist;
eine leitfähige Elektrode (22), die an der Widerstandsschicht (20) angebracht ist und mit dieser verbunden ist, um Strom dahindurch zu führen; wobei sich die Widerstandsschicht (20) und die Elektrode (22) entlang einer im Wesentlichen gesamten Länge der Isolatorfolie (18) in der Nähe einer Kontaktfläche des Scheibenwischerblatts gegen die Windschutzscheibe (10) in Parkstellung (14) erstrecken, wenn die Isolatorfolie (18) an der Kraftfahrzeugwindschutzscheibe (10) angebracht ist, das Verfahren umfassend die Schritte:
(a) Anbringen der Widerstandsschicht (20) und der Elektrode (22) an der Isolatorfolie (18), um ein Heizelement (16) zu erzeugen; und
(b) nach Schritt (a), Anbringen des Heizelements (16) an einer Innenoberfläche einer Fahrzeugwindschutzscheibe (10) in einer Parkstellung (14) eines Scheibenwischers an der Windschutzscheibe.

## Revendications

1. Ensemble pare-brise de véhicule automobile comprenant :
- un pare-brise incurvé (10) ;
- des essuie-glaces servant à l'essuyage du pare-brise (10) et positionnés dans une position de repos (14) lorsqu'ils ne sont pas activés ; et
- un dispositif de chauffage (16) pour position de repos d'essuie-glace, comprenant :
une feuille isolante polymère flexible (18) épousant une surface inférieure du pare-brise incurvé (10) de véhicule automobile, présentant une longueur alignée sur une longueur de l'essuie-glace dans la position de repos (14) et dimensionnée de telle sorte qu'une périphérie de la feuille isolante (18) cerne de manière proximale une zone de contact d'un balai d'essuie-glace contre un pare-brise (10) dans la position de repos (14), la feuille isolante (18) supportant :
(a) une couche résistive (20) générant de la chaleur lorsqu'elle est traversée par de l'électricité ; et
(b) une électrode conductrice (22) communiquant avec la couche résistive (20) pour faire passer du courant à travers celle-ci ; ladite couche résistive (20) et l'électrode (22) s'étendant le long de toute une longueur de la feuille isolante (18) près d'une zone de contact du balai d'essuie-glace contre le pare-brise (10) dans la position de repos (14) lorsque la feuille isolante (18) est appliquée sur le pare-brise (10) de véhicule automobile,
**caractérisé en ce que**
l'électrode (22) comporte des électrodes supérieure et inférieure (22) s'étendant le long d'une longueur de la feuille isolante (18) au niveau de bords opposés de la feuille isolante (18) sur toute sa largeur et comportant une électrode d'alimentation s'étendant à partir d'une extrémité de la feuille isolante (18) jusqu'à un point de connexion avec l'une des électrodes supérieure et inférieure (22) à un point médian le long d'une longueur de la feuille isolante polymère flexible ; et
des électrodes supérieure et inférieure (22) comportant chacune des éléments formant doigts s'étendant vers l'extérieur suivant un agencement interdigité avec des électrodes en forme de doigts d'une autre électrode parmi les électrodes supérieure et inférieure (22).

2. Ensemble pare-brise de véhicule automobile selon la revendication 1, dans lequel la longueur de la feuille isolante (18) est au moins six fois plus longue qu'une hauteur de la feuille isolante (18) mesurée le long d'un plan de fixation du dispositif de chauffage (16) pour position de repos d'essuie-glace à un pare-brise (10), et dans lequel les électrodes (22) s'étendent dans des structures de bus continues (24, 26) le long de la longueur du dispositif de chauffage (16) pour position de repos d'essuie-glace pour favoriser la circulation du courant moyen le long d'une largeur du dispositif de chauffage (16).

3. Ensemble pare-brise de véhicule automobile selon la revendication 1 ou 2, dans lequel la feuille isolante (18) présente une longueur supérieure à 46,8 cm (20 pouces) et une hauteur inférieure à 7,6 cm (trois pouces) .

4. Ensemble pare-brise de véhicule automobile selon la revendication 1 ou 2, dans lequel la feuille isolante (18) présente une longueur supérieure à 101,6 cm (40 pouces).

5. Ensemble pare-brise de véhicule automobile selon la revendication 2, comportant en outre un adhésif (52) appliqué en contact avec la couche résistive (20).

6. Ensemble pare-brise de véhicule automobile selon l'une des revendications précédentes, dans lequel le dispositif de chauffage (16) pour position de repos d'essuie-glace est noir lorsque vu depuis le côté de la feuille isolante (18).

7. Ensemble pare-brise de véhicule automobile selon la revendication 6, dans lequel la feuille isolante (18) est transparente et le matériau de dispositif de chauffage est noir.

8. Ensemble pare-brise de véhicule automobile selon la revendication 1, dans lequel l'électrode (22) comporte une électrode extérieure et une électrode intérieure s'étendant le long de la longueur de la feuille isolante (18), l'électrode extérieure entourant l'électrode intérieure, dans lequel l'électrode extérieure présente une largeur inférieure à celle de l'électrode intérieure, dans lequel les électrodes intérieure et extérieure (22) comportent chacune des éléments formant doigts s'étendant vers l'extérieur suivant un agencement interdigité avec des électrodes en forme de doigts d'une autre électrode parmi les électrodes intérieure et extérieure.

9. Ensemble pare-brise de véhicule automobile selon la revendication 1, dans lequel la feuille isolante (18), la couche résistive (20) et l'électrode (22) sont divisées en des première et deuxième portions (42a, 42b) reliées par des connecteurs à sertir (40) en métal ductile, dans lequel les connecteurs à sertir (40) en métal ductile comportent des éléments conducteurs (46) perçant les première et deuxième portions lorsqu'ils sont en chevauchement pour relier électriquement l'électrode (22) sur les première et deuxième portions (42a, 42b), et
dans lequel les connecteurs à sertir (44) en métal ductile comportent des portions opposées (43a, 43b) dimensionnées pour recevoir entre elles les première et deuxième portions (42a, 42b) suivant une configuration de chevauchement et pour être serties ensemble de manières non élastique autour des première et deuxième portions et dans lequel les portions opposées (43a, 43b) comportent des dents (46) s'étendant vers l'intérieur conçues pour transpercer les première et deuxième portions en chevauchement (42a, 42b) pour relier électriquement l'électrode (22) sur les première et deuxième portions.

10. Ensemble pare-brise de véhicule automobile selon la revendication 9, dans lequel chaque connecteur à sertir (44) en métal ductile comporte en outre un connecteur (50) servant à recevoir un câble électrique (54) pour la communication électrique avec les dents (46) s'étendant vers l'intérieur,
dans lequel le connecteur (44) est un connecteur de sertissage servant à recevoir un conducteur de câble électrique pour être serti autour de celui-ci pour la connexion électrique entre le conducteur de câble électrique et le connecteur à sertir en métal ductile.

11. Ensemble pare-brise de véhicule automobile selon la revendication 1, dans lequel la couche résistive (20) est un matériau à coefficient de température positif.

12. Ensemble pare-brise de véhicule automobile selon la revendication 1, dans lequel le matériau d'électrode consiste en des particules de métal conducteur dans un liant appliqué directement sur la feuille isolante (18).

13. Procédé de fabrication d'un ensemble pare-brise de véhicule automobile tel que défini dans la revendication 1, à l'aide d'un dispositif de chauffage (16) pour position de repos d'essuie-glace présentant :
une feuille isolante polymère flexible (18) conçue pour épouser une surface inférieure d'un pare-brise incurvé (10) de véhicule automobile, présentant une longueur alignée sur une longueur d'un essuie-glace dans la position de repos (14) et dimensionnée de telle sorte qu'une périphérie de la feuille cerne de manière proximale une zone de contact d'un balai d'essuie-glace contre un pare-brise (10) dans la position de repos (14) ;
une couche résistive (20) dont la feuille isolante (18) polymère flexible est revêtue ; une électrode conductrice (22) appliquée sur la couche résistive (20) et communiquant avec celle-ci pour faire passer du courant à travers celle-ci ; ladite couche résistive (20) et l'électrode (22) s'étendant le long de pratiquement toute une longueur de la feuille isolante (18) près d'une zone de contact du balai d'essuie-glace contre le pare-brise (10) dans la position de repos (14) lorsque la feuille isolante (18) est appliquée sur le pare-brise (10) de véhicule automobile, le procédé comprenant les étapes de :
(a) application de la couche résistive (20) et de l'électrode (22) sur la feuille isolante (18) pour produire un dispositif de chauffage (16) ; et
(b) après l'étape (a), application du dispositif de chauffage (16) sur une surface intérieure d'un pare-brise de véhicule (10) dans une position de repos (14) d'essuie-glaces sur le pare-brise.
